# EUROPEAN PATENT APPLICATION

(11) **EP 0 616 987 A2**
(43) Date of publication of application: **28.09.1994**
(21) Application number: 94200671.9
(22) Date of filing: 16.03.1994
(51) Int. Cl.: C04B 28/26, C04B 28/34, F16L 59/02

(54) **An insulating material**

(30) Priority: 23.03.1993 NL 9300510
(71) Applicant: ISOLEERMATERIALENINDUSTRIE PULL B.V., NL-3911 TX Rhenen (NL)
(72) Inventor: Bijl, Coenraad Jacob, NL-3911 TK Rhenen (NL)
(74) Representative: Vollebregt, Cornelis Jacobus, Ir.

(57) **Abstract**

The invention relates to an insulating material consisting of a mixture of pearlite and/or vermiculite granules, mica and an ash-containing material. An amount of 0.5 - 5.0 kgs of mica and 1.5 - 6.5 kgs of ash-containing material is admixed to an amount of 95 - 100 l of pearlite and/or vermiculite granules. The mixture is bound with 1 - 8 kgs of a binding agent. The invention furthermore relates to a method of producing an insulated duct, which is built up of two shells and an insulating material provided between the shells. The one shell is placed within the other shell and the space between the shells is filled with an insulating material, after which the binding agent is allowed to cure.

## Description

The invention relates to an insulating material.

Insulating materials have been used for various purposes for quite some time. Many of the known insulating materials, such as for example asbestos or glass wool, have a fibre-like structure, which may involve a health hazard for those who come into contact with the insulating materials.

Furthermore insulating materials are known, which are pressed into plates configured to conform to the shape of the objects to be insulated, whereby usually vermiculite, a mica-like mineral, is used. Pressed insulating plates of this type are for example used in flue ducts for the discharge of flue gases, which flue ducts are built up of two shells surrounding one another, between which the plates pressed from vermiculite are provided. The production and provision of such pressed plates is a costly and time-consuming process, whilst an accurate configuration of the insulating plates, in particular for bends, is difficult to realise, so that there is a risk of heat loss at those places. Furthermore it has become apparent, in particular with flue ducts of this type, that the temperature of the outer wall may become rather high in extreme cases.

The object of the invention is to provide an insulating material, which, when used, will obviate the above-mentioned drawbacks.

According to the invention this may be achieved by means of an insulating material consisting of a mixture of pearlite and/or vermiculite granules, mica and an ash-containing material, whereby 0.5 - 5.0 kgs of mica and 1.5 - 6.5 kgs of ash-containing material are admixed to an amount of 95 - 100 l of pearlite and/or vermiculite granules, whilst the mixture is bound with 1 - 8 kgs of a binding agent.

It has become apparent that the insulating properties of an insulating material of this type are surprisingly good, so that when an insulating layer of a specified thickness is made from this insulating material, better insulating properties are obtained than when the above-mentioned common insulating materials are used. In addition to this said insulating material is easy to handle, since it can be poured into any desired space to fill up such a space before curing of the binding agent takes place.

This makes it possible for example to produce an insulated duct consisting of two shells surrounding each other, by pouring the aforesaid insulating material into the space present between the shells, after which the binding agent is allowed to cure.

Particularly when one or both shells are vibrated while the insulating material is being poured between the shells, a satisfactory dense filling of the space between the two shells will be effected, also in case of a complicated configuration of the shells, for example at bends.

In practice a very good insulating material has been obtained by starting from pearlite and/or vermiculite granules, which have been manufactured by expanding pearlite and/or vermiculite ore in a manner known per se. For this process pearlite and/or vermiculite granules having a diameter of 0 - 4 mm, preferably 0 - 2 mm, are used. These pearlite and/or vermiculite granules are mixed with mica and an ash-containing material in a mixing device. It is thereby preferred to use two kinds of ash, namely so-called rice stalk ash, obtained by burning rice chaff, and fly ash.

The chemical composition of the ash of rice chaff is als follows:

| | |
|---|---|
| SiO2 | 90 - 95 % |
| Al2O3 | 1.5 % |
| Fe2O3 | 0.5 % |
| CaO, MgO, K2O, Na2O | the balance |
| C-content | less than 5 % |

The specific weight is ± 0.20 t/m3 at a humidity level of < 1 %.

The used fly ash, with smoked silicon oxide as the main component, is marketed by the applicant under the name of "Pumicron".

The chemical composition of this material is:

| | |
|---|---|
| SiO2 | 88 - 98 % |
| C | max. 2.0% |
| Fe2O3 | max. 2.2 % |
| Al2O3 | max. 2.2 % |
| Na2O | max. 1.8 % |
| K2O | max. 2.5 % |
| MgO | max. 2.0 % |
| SO3 | max. 1. 5 % |

The specific weight is 2.30 - 2.40 g/cm3.

The mica used consists of thin flakes having flat surfaces, which has the following composition:

| | |
|---|---|
| SiO2 | 40 - 42 % |
| MgO | 22 - 24 % |
| Al2O3 | 9 - 11 % |
| K2O | 10 - 11 % |
| Fe2O3 | 9 - 11 % |

Other components, for example carbonates and/or oxides of Ca, Na, P, Ti, to a maximum of 5 %.

In order to be mixed the pearlite and/or vermiculite granules are first charged to a mixing device, whereby the granules are slightly moistened by spraying 1 - 3 l of finely atomized or misted water per 95 - 100 l of pearlite and/or vermiculite granules onto the granules.

Then the fly ash is added, followed by the rice ash and finally by the mica, whilst mixing together the materials. Said mixing preferably takes place in a counterflow mixer.

Finally a binding agent, also preferably in atomized form, is added to the mixture present inside the mixer.

A suitable binding agent has appeared to be water glass, preferably potassium water glass. Another binding agent that has proved to be usable is aluminium phosphate.

The mixture thus obtained is still sufficiently liquid to be poured into a desired space.

One application of the above-described insulating material that has appeared to be particularly suitable in practice is to introduce this material into the space between two shells surrounding each other, for example steel shells or tubes, as used in flue ducts. Such shells may for example be arranged in concentrically surrounding relationship with respect to each other, after which the space located between the shells is filled with the above-described material. In order to obtain a satisfactory filling of the space between the shells it is preferred to vibrate said shells, which may for example be effected in a simple manner by placing the shells on a vibrating table while the space between the shells is being filled. After filling and vibrating the binding agent will be allowed to cure. Eventually a duct comprising two shells has been obtained, which appears to have considerably better insulating properties than the flue duct shells of the same dimensions and the same thickness of the insulating layer between the shells that have been usual so far.

With the insulated ducts for flue gases that have been usual so far it is generally necessary to provide an additional casing around the insulated duct in order to be able to meet the statutory requirements with regard to the maximum allowable temperatures at the outside of the unit. Generally such a casing may be left out when an insulated duct according to the invention is used.

An insulated duct according to the invention will be cheaper to produce by itself already than the insulated ducts that have been usual so far, whilst in addition to that it will generally be possible to leave out an additional casing surrounding the insulated duct, so that considerable savings may be realised.

## Claims

1. An insulating material consisting of a mixture of pearlite and/or vermiculite granules, mica and an ash-containing material, whereby 0.5 - 5.0 kgs of mica and 1.5 - 6.5 kgs of ash-containing material are admixed to an amount of 95 - 100 l of pearlite and/or vermiculite granules, whilst the mixture is bound with 1 - 8 kgs of a binding agent.

2. An insulating material according to claim 1, characterized in that the ash which is added is fly ash and/or a combustion product of rice material (rice stalk ash).

3. An insulating material according to claim 1 or 2, characterized in that 0.6 - 2.2 kgs of fly ash and 0.9 - 4.3 kgs of rice stalk ash are added to an amount of 95 - 100 l of pearlite and/or vermiculite granules.

4. An insulating material according to any one of the preceding claims, characterized in that pearlite and/or vermiculite granules having a diameter of 0 - 4 mm, preferably up to ± 2 mm, are used.

5. An insulating material according to any one of the preceding claims, characterized in that the binding agent is water glass, in particular potassium water glass.

6. An insulating material according to any one of the preceding claims 1 - 4, characterized in that the binding agent is aluminium phosphate.

7. A method of producing an insulated duct, which is built up of two shells and an insulating material provided between said shells, characterized in that the one shell is placed within the other shell and that the space between said shells is filled with an insulating material according to any one of the preceding claims, after which the binding agent is allowed to cure.

8. A method according to claim 7, characterized in that at least one of the shells is vibrated during filling of the space present between said shells.

9. A duct part provided with two shells surrounding each other and with an insulating material according to any one of the claims 1 - 6 provided between said shells.
